# EUROPÄISCHE PATENTANMELDUNG

(11) **EP 2 093 521 A2**
(43) Veröffentlichungstag der Anmeldung: **26.08.2009**
(21) Anmeldenummer: 08104753.2
(22) Anmeldetag: 15.07.2008
(51) Int. Cl.: F24J 2/24, F24J 3/06, F24J 3/08

(54) **Rohrkollektor**

(30) Priorität: 19.02.2008 DE 202008002342 U
(71) Anmelder: Strebe, Jürgen, 17509 Lubmin (DE)
(72) Erfinder: Strebe, Jürgen, 17509 Lubmin (DE)
(74) Vertreter: Garrels, Sabine

(57) **Zusammenfassung**

Die Erfindung betrifft einen Rohrkollektor zur Wärmegewinnung oder Klimatisierung aus dem umgebenden Medium.

Aufgabe der vorliegenden Erfindung ist es, einen Rohrkollektor zu entwickeln, welcher einen wesentlich höheren Wirkungsgrad als der Stand der Technik besitzt, wobei mit möglichst geringem Primärenergieaufwand möglichst viel Wärme- bzw. Kälteenergie aus der Umwelt genutzt werden kann.

Der erfindungsgemäße Rohrkollektor ist dadurch gekennzeichnet, dass um ein Zentralrohr ein Spiralblech angeordnet ist, wobei diese Anordnung sich in einem Außenrohr befindet und am unteren Ende des Zentralrohrs eine Venturi-Düse angeordnet ist.

Werden mehrere Rohrkollektoren zur Erhöhung der Energieleistung angeordnet, so müssen in allen Rohrkollektoren gleiche Strömungsverhältnisse vorherrschen.

## Beschreibung

Die Erfindung betrifft einen Rohrkollektor zur Wärmegewinnung oder Klimatisierung aus dem umgebenden Medium.

### Stand der Technik

Wärmepumpen können entweder mit einem Grundwasserwärmetauscher, einem Erdwärmetauscher oder einem Luftwärmetauscher ausgerüstet sein.

Bekannte Luftwärmetauscher sind beispielsweise als Platten-Wärmetauscher aufgebaut. Es werden sehr viele flache aber breite, gefalzte Kanäle (Größenordnung 50 bis 100) übereinander angeordnet, welche aus geriffelten Aluminiumblechen oder aus dünnem transparentem Kunststoff bestehen können. Hierbei findet über dünne Kunststoff- oder Blechflächen, welche die beiden Luftströme trennen ein Austausch statt. Die Frischluft wird dadurch erwärmt und den Wohnräumen zugeführt (Zuluft). Die Abluft wird abgekühlt und ins Freie geblasen (Fortluft).

Für die Wärmegewinnung wird entweder ein Medium in Form von Frisch- und Abluft im Gegenstrom aneinander vorbei geführt, so dass ein Wärmestrom von der warmen Abluft hin zur kalten Frischluft stattfindet. Oder die Wärme der umgebenden Luft wird aufgenommen und lässt ein Kältemittel verdampfen. Hierbei spielt es eine wesentliche Rolle, eine möglichst große aktive Fläche des Verdampfers zu realisieren.

Nachteil des Standes der Technik ist es, dass die Effektivität bekannter Luftwärmetauscher mit der Zeit nachlässt, weil sich die Wärmetauscher-Platten durch Schmutzpartikel zusetzen können.

Es ist weiterhin Stand der Technik, mittels Sonden Erdwärme zu nutzen. Bekannte Sonden sind durch die Bauart "Rohr in Rohr" ausgebildet und nutzen in der Regel ein Fluid als Wärmeträger. Z.B. wird in DE 10202261 A1 für die oberflächennahe Gewinnung von Wärmeenergie aus dem Erdreich oder für die oberflächennahe Einleitung von Wärmeenergie in das Erdreich eine Erdsonde vorgestellt, bei der eine typische "Rohr in Rohr"-Bauart mit einem an seinem unteren Ende offenen Tauchrohr vorgestellt wird. Diese Sonden weisen schlechte Energieeffizienzen auf, da die in der Tiefe gewonnene Wärme beim Aufsteigen durch das Innenrohr teilweise an das im Außenrohr in die Tiefe gepumpte Fluid abgegeben wird. Isolierte Innenrohre sind in der Regel sehr aufwändig gestaltet und somit oft kostenintensiv.

### Darstellung der Erfindung

Aufgabe der vorliegenden Erfindung ist es, einen Rohrkollektor zu entwickeln, welcher einen wesentlich höheren Wirkungsgrad als der Stand der Technik besitzt, wobei mit möglichst geringem Primärenergieaufwand möglichst viel Wärme- bzw. Kälteenergie aus der Umwelt genutzt werden kann.

Die erfindungsgemäße Rohrkollektor ist dadurch gekennzeichnet, dass um ein Zentralrohr ein Spiralblech angeordnet ist, wobei diese Anordnung sich in einem Außenrohr befindet und am unteren Ende des Zentralrohrs eine Venturi-Düse angeordnet ist.

Werden mehrere Rohrkollektoren zur Erhöhung der Energieleistung angeordnet, so müssen in allen Rohrkollektoren gleiche Strömungsverhältnisse vorhanden sein.

Der Rohrkollektor besteht aus einem formstabilen Material, vorzugsweise aus Metall, insbesondere Edelstahl.

Der Rohrkollektor kann mit einem Fluid oder einem Gas betrieben werden.

Ein erheblicher Vorteil liegt in der Handlichkeit und der Montage ohne besondere Anforderungen. Die ganze Anlage ist nach Euromaßen konzipiert und passt zusammen mit der Wärmepumpe auf eine Euro-Palette. Durch ein sehr geringes Gewicht kann eine Person die Sonde vor Ort bewegen.

Vorteil der Erfindung ist es, dass die technischen Daten (Leistungs- und Arbeitsziffer) höher liegen, als bei Rohrkollektoren mit kleinen Verdampferflächen. Außerdem kann sowohl die umgebende Luft, direkte Sonneneinstrahlung und Regenwasser als auch die ersten wasserführenden Schichten, wenn der Rohrkollektor ins Erdreich verbracht wird, können als Energieträger genutzt werden.

### Kurze Beschreibung der Abbildungen

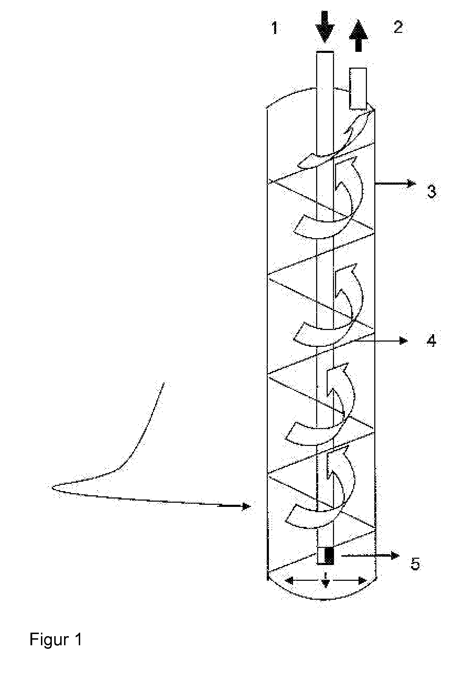

Nachfolgend wird die Vorrichtung anhand von Figurenbeschreibungen näher erläutert. Dabei zeigt Figur 1 einen Längsschnitt durch eine erfindungsgemäßen Rohrkollektor.

### Ausführung der Erfindung

Um ein Zentralrohr 1 ist ein Spiralblech 4 geschweißt und diese Kombination steckt in einem Außenrohr 3 mit entsprechend großem Durchmesser.

Das gasförmige Kältemittel wird durch das Zentralrohr 1 geleitet und durch eine Venturi-Düse 5 gepresst, es entspannt und verflüssigt sich. Durch die an der Venturi-Düse 5 entstandene Geschwindigkeitserhöhung des Kältemittels werden Turbulenzen erzeugt, welche die Energieaufnahme und damit die Verdampfung an der großen Wärmetauscherfläche des Außenrohres 3 wesentlich positiv beeinflusst.

Diese Gasturbulenzen werden über das Spiralblech 4, welches wie eine Öltreppe wirkt, nach oben hin zum Rücklauf 2 geleitet und dabei langsam abgebaut. Die Energieaufnahme des Kältemittels wird wesentlich begünstigt und das Betriebsmittel Öl, für die Schmierung des Verdichters, wird über den Treppeneffekt mit nach oben gerissen und zum Verdichter der Wärmepumpe transportiert.

Der Rohrkollektor mit einer Länge von ca. 2,00 m hat eine Wärmetauscherfläche am Außenrohr 3 von 0,63 m². Der einzelne Rohrkollektor kann nach Bedarf erweitert werden, indem mehrere Rohrkollektoren angeordnet werden. Dabei ist aber unbedingt darauf zu achten, dass in allen Rohrkollektoren gleiche Strömungsverhältnisse vorhanden sind.

Die Energieleistung von sechs Rohrkollektoren reicht aus, um ein Haus mit einer Wohnfläche von 130 m² zu klimatisieren. Der Rohrkollektor ist zum Kühlen und zum Heizen geeignet.

Der einzelne Rohrkollektor ist aus Edelstahl gefertigt.

Der Rohrkollektor kann sowohl als Außenverdampfer als auch als Kondensator genutzt werden. Für die Nutzung als Kondensator muss eine Umkehrung der Strömungsrichtung erfolgen. Hierzu wird das Zentralrohre 1 als Rücklaufrohr genutzt. Durch den Einbau einer Venturi-Düse 5 wird die Nennweite des jeweiligen Zentralrohrs 1 noch etwas weiter verengt, so dass der Venturi-Effekt zur weiteren Geschwindigkeitssteigerung des aufsteigenden Mediums genutzt werden kann. Bis zum Expansionsventil werden 16 bar gemessen, danach 3 bar bis zur nächsten Düse, somit erfolgt eine doppelte Expansion. Es entsteht ein Düseneffekt. Um Geräusche aus diesem Düseneffekt zu verringern kann der Rohrkollektor teilweise eingegraben werden.

Der Rohrkollektor aus Edelstahl besitzt eine hydrophile Oberflächen. Bei +5 °C und höher ist die Arbeitszahl sehr hoch. Bei einem Verdampfungseffekt bilden sich Eiskristalle an der Wärmetauscherfläche des Außenrohres 3. Durch ein zeitweises Abschalten des Gaskreislaufs werden die Eiskristalle verflüssigt. Das gewonnene Kondensatwasser hat einen hohen Reinheitsgrad und kann durch entsprechende Zusätze zu Trink- oder Nutzwasser gewandelt werden. Es kann am Boden in einem Auffangteller gesammelt werden, von wo es abgeleitet wird. Dazu ist der Rohrkollektor mit einer kleinen, hier nicht weiter gezeigten Photovoltaikanlage ausgerüstet, die Strom erzeugen und in einer Batterie gespeichert werden kann.

Dieser Effekt kann ausgenutzt werden, um beispielsweise eine Wassergewinnung aus der Luft zu ermöglichen.

In einem weiteren Ausführungsbeispiel wird der Rohrkollektor vollständig, bis zum ersten Wasserleiter eingegraben, d.h. die notwendige Bohrung wird bis zur ersten wasserführenden Schicht durchgeführt. Ein besonderer Vorteil besteht darin, dass lediglich eine Trockenbohrung notwendig ist, somit fallen keine Bohrschlämme an, was den Einbau sehr umweltfreundlich macht.

## Patentansprüche

1. Rohrkollektor **dadurch gekennzeichnet, dass**
um ein Zentralrohr (1) ein Spiralblech (4) angeordnet ist, wobei diese Anordnung sich in einem Außenrohr (3) befindet und am unteren Ende des Zentralrohrs (1) eine Venturi-Düse (5) angeordnet ist.

2. Rohrkollektor nach Anspruch 1 **dadurch gekennzeichnet, dass**
mehrere Rohrkollektoren mit gleichen Strömungsverhältnissen angeordnet werden.

3. Rohrkollektor nach Anspruch 1 oder 2 **dadurch gekennzeichnet, dass**
dieser aus Edelstahl besteht.

4. Rohrkollektor nach einem der Ansprüche 1, 2 oder 3 **dadurch gekennzeichnet, dass**
dieser mit einem Fluid oder einem Gas betrieben wird.
